# EUROPÄISCHE PATENTSCHRIFT

(11) **EP 3 935 456 B1**
(45) Veröffentlichungstag und Bekanntmachung des Hinweises auf die Patenterteilung: **24.07.2024**
(21) Anmeldenummer: 20704833.1
(22) Anmeldetag: 10.02.2020
(51) Int. Cl.: G05B 19/418

(54) **VERFAHREN ZUR PRODUKTFÜHRUNG IN EINER STRECKBLAS- UND/ODER ABFÜLLANLAGE UND STRECKBLAS- UND/ODER ABFÜLLANLAGE FÜR FLASCHEN**
METHOD FOR PRODUCT CONTROL IN A STRETCH BLOW MOULDING- AND/OR FILLING INSTALLATION, AND STRETCH BLOW MOULDING-AND/OR FILLING INSTALLATION FOR BOTTLES
PROCÉDÉ DE GUIDAGE DE PRODUIT DANS UNE INSTALLATION DE MOULAGE PAR SOUFFLAGE-ÉTIRAGE ET/OU DE MISE EN BOUTEILLES ET INSTALLATION DE MOULAGE PAR SOUFFLAGE-ÉTIRAGE ET/OU DE MISE EN BOUTEILLES POUR BOUTEILLES

(30) Priorität: 06.03.2019 DE 102019203062
(43) Veröffentlichungstag der Anmeldung: 12.01.2022
(73) Patentinhaber: Krones AG, 93073 Neutraubling (DE)
(72) Erfinder: WILL, Christof, 93073 Neutraubling (DE)
(74) Vertreter: Grünecker Patent- und Rechtsanwälte PartG mbB
(86) Internationale Anmeldenummer: PCT/EP2020/053297
(87) Internationale Veröffentlichungsnummer: WO 2020/177982

(56) Entgegenhaltungen:
- DE-A1- 102011 017 448
- US-A1- 2006 149 407
- US-A1- 2017 315 540

## Beschreibung

Die Erfindung betrifft ein Verfahren zur Produktführung in einer Streckblasanlage und/oder Abfüllanlage und eine Streckblasanlage und/oder Abfüllanlage für Flaschen.

Rohlinge aus Kunststoff, auch Vorformlinge oder Preforms genannt, können bekanntermaßen durch Streckblasen zu Flaschen umgeformt werden. Die Rohlinge werden hierfür unmittelbar vor dem Streckblasen vorgewärmt und automatisch hinsichtlich verschiedener für das Streckblasen relevanter Parameter inspiziert, wie beispielsweise auf unzulässige Verformung, Beschädigung und/oder Verschmutzung.

Aus DE 102 59 589 B3 ist beispielsweise eine Qualitätskontrolle von Rohlingen sowohl vor als auch nach einer Heizstation bekannt. Aufgrund einer ersten Inspektion werden die Rohlinge dann beispielsweise hinsichtlich des Ausmaßes möglicher Fehler klassifiziert. Es wird dann entschieden, ob bestimmte fehlerhafte Rohlinge bereits vor der Heizstation oder erst danach auszuleiten sind. In jedem Fall lässt sich vermeiden, dass fehlerhafte Rohlinge einer nachgeschalteten Streckblasmaschine zugeführt werden.

Aus DE 10 2005 060 814 A1 ist ferner bekannt, fehlerhafte Rohlinge gegebenenfalls ohne Blasvorgang durch eine Streckblasmaschine zu leiten und erst dahinter auszuleiten. Ebenso wird beschrieben, dass je nach Fehlerausmaß der einzelnen Rohlinge ein unvollständiger Streckblasvorgang ausgeführt werden kann, insbesondere lediglich ein Recken fehlerhafter Rohlinge. Durch Inspektion der ordnungsgemäß geblasenen Flaschen und der gegebenenfalls lediglich gereckten Rohlinge lassen sich zusätzliche Erkenntnisse gewinnen, beispielsweise ob und/oder wie bestimmte fehlerhafte Eigenschaften und/oder Zustände der Rohlinge mit dem Ergebnis des Streckblasvorgangs korrelieren.

Es hat sich jedoch als schwierig und zeitaufwendig erwiesen, die dabei erhobenen Daten so auszuwerten, dass möglichst immer nur diejenigen Rohlinge aus dem Produktstrom ausgeleitet werden, die mit großer Wahrscheinlichkeit zu einer fehlerhaften Flasche führen und/oder einen Maschinenfehlerzustand im Bereich der Streckblasmaschine und/oder einer nachgeschalteten Füllmaschine verursachen. Insbesondere wäre es wünschenswert, möglichst viele Eigenschaften und/oder Zustände der Rohlinge mit derartigen Ergebnisdaten korrelieren zu können, um die Herstellung und Abfüllung der Flaschen für den laufenden Produktionsprozess qualitativ zu optimieren und Ausfallzeiten und/oder Produktionslücken im Produktionsstrom zu minimieren.

Aus DE 10 2011 017 448 A1 ist ferner ein Verfahren zur Störungsvermeidung in einer Behälterbehandlungsanlage bekannt, bei dem für einzelne Anlagenbestandteile Referenzkennwerte und Prüfkennwerte festgelegt werden. Man versucht dann, Zusammenhänge zwischen Fehlerursachen und Fehlerzuständen mittels rechnergestützter künstlicher Intelligenz zu optimieren, beispielsweise mit einem neuronalen Netz. In diesem Zusammenhang werden auch automatische oder halbautomatische Einlernprozesse für die Behandlungsanlage thematisiert.

Es wäre jedoch wünschenswert, nicht nur Fehlerzustände solcher Anlagen zu vermeiden, sondern die Produktqualität und die Maschinenauslastung insgesamt zu optimieren.

Wenigsten eine der gestellten Aufgaben wird mit einem Verfahren nach Anspruch 1 gelöst. Demnach dient dieses zur Produktführung in einer Streckblasanlage und/oder Abfüllanlage für Flaschen bzw. zur Produktionssteuerung der Anlage. Bei dem Verfahren misst man Rohling-Parameter von zum Streckblasen bereitgestellten Rohlingen, insbesondere solchen aus PET, automatisch und speichert dabei gewonnene Initialdaten ab. Ferner misst man Flaschen-Parameter streckgeblasener leerer und/oder anschließend gefüllter Flaschen vorzugsweise automatisch und stellt insbesondere beim Streckblasen und/oder Abfüllen auftretende Maschinenfehlerzustände automatisch fest. Dabei werden jeweils Ergebnisdaten gewonnen, den Rohlingen individuell zugeordnet und abgespeichert. Auf der Grundlage einer Datenanalyse der gespeicherten Initialdaten und Ergebnisdaten berechnet man ferner wenigstens ein im Produktionsbetrieb nachfolgend geltendes Ausleitkriterium zur Entscheidung über ein Ausleiten fehlerhafter Rohlinge oder Flaschen. Schließlich wird die Berechnung des Ausleitkriteriums unter Berücksichtigung von im Produktionsbetrieb hinzugewonnenen Initialdaten und Ergebnisdaten insbesondere automatisch aktualisiert.

Ausleitkriterien können folglich mit zunehmender Produktionsdauer zunehmend genauer berechnet werden, um die Rohlinge oder Flaschen möglichst zielgerichtet auszuleiten, also beispielsweise an geeigneter Stelle im Produktionsablauf, um einerseits möglichst viele Ergebnisdaten zur Optimierung des Produktionsablaufs zu gewinnen andererseits Maschinenfehlerzustände möglichst zuverlässig zu vermeiden. Somit lassen sich auch Produktionsunterbrechungen minimieren.

Insbesondere ist ein im Produktionsbetrieb voranschreitender Maschinenlernprozess möglich, der auf der Grundlage von Rechenregeln automatisch abläuft und ferner optional von Bedienern gesteuert werden kann.

Vorzugsweise werden die hinzugewonnenen Initialdaten und Ergebnisdaten in den Produktionsbetrieb manuell und/oder automatisch aktualisiert übernommen.

Maschinenparameter, beispielsweise einer Heizstation zum Vorwärmen der Rohlinge, einer Streckblasmaschine zum Herstellen der Flaschen und/oder einer Füllmaschine zum Befüllen der Flaschen können auf der Grundlage der hinzugewonnenen Initialdaten und Ergebnisdaten zur Optimierung der Produktqualität angepasst werden.

Dies dient einer laufenden Qualitätssicherung und/oder Qualitätsverbesserung hergestellter / gefüllter Flaschen. Vor allem lässt sich so der Ausschussanteil (scrap rate) an der Produktion reduzieren.

Bei der Ermittlung von Ausleitkriterien gibt man vorzugsweise der Qualitätsoptimierung der Produktion Vorrang vor einer möglichst umfassenden Erhebung von Initialdaten und/oder Ergebnisdaten. Das heißt, im Abwägungsfall leitet man einen zur Weiterverarbeitung ungeeigneten Rohling möglichst so frühzeitig aus dem Produktstrom aus, wie es zur Erzielung einer bestimmten Produktqualität nötig ist oder prognostiziert werden kann.

Vorzugsweise wird das Ausleitkriterium derart automatisch verändert, dass eine mittels der Datenanalyse prognostizierte anteilige Häufigkeit zulässiger Werte der Flaschen-Parameter steigt und optional ferner eine prognostizierte anteilige Häufigkeit der Maschinenfehlerzustände sinkt. Dies ermöglicht einen sich laufend selbst verbessernden Optimierungsprozess. Somit kann die Produktqualität der streckgeblasenen und/oder gefüllten Flaschen verbessert werden bei gleichzeitiger Minimierung von Produktionsausfallzeiten und/oder Produktlücken im Produktstrom. Unter der anteiligen Häufigkeit ist beispielsweise die Anzahl korrekt hergestellter und gefüllter Flaschen pro Anzahl überprüfter Rohlinge, insbesondere unter der Voraussetzung gleichbleibender mittlerer Qualität der bereitgestellten Rohlinge, zu verstehen.

Vorzugsweise umfasst die Datenanalyse ein Data-Mining, insbesondere eine Assoziationsanalyse und/oder eine Regressionsanalyse und/oder eine Datenklassifikation der Initialdaten und/oder Ergebnisdaten. Klassifikation, Regressionsanalyse und Assoziationsanalyse eignen sich insbesondere dazu, neu hinzugewonnene Initialdaten und Ergebnisdaten im Rahmen einer Prognose über die Auswirkung bestimmter Rohling-Parameter auf zu erzielende Flaschen-Parameter zu bewerten.

Derartige Analyseverfahren können im Rahmen von maschinellen Lernprozessen und einer Selbstoptimierung der Streckblasanlage und/oder Abfüllanlage im Sinne einer künstlichen Intelligenz oder dergleichen verwendet werden. Zudem lassen sich zusätzliche, gegebenenfalls zuvor unbekannte oder unterbewertete Korrelationen zwischen einzelnen Rohling-Parametern und/oder Flaschen-Parametern herstellen und/oder in die Datenanalyse einbeziehen.

Vorzugsweise löst ein Erfüllen des Ausleitkriteriums anhand der Initialdaten eines bestimmten Rohlings einen der nachfolgenden Schritte aus: ein Ausleiten des Rohlings stromaufwärts der zum Streckblasen vorgesehenen Blasform; ein Durchleiten des Rohlings in der vorgesehenen Blasform ohne Streckblasen und mit einem anschließenden Ausleiten des Rohlings; oder ein Streckblasen des Rohlings und Ausleiten der dabei hergestellten Flasche, insbesondere vor dem Abfüllen.

Vorzugsweise werden die Rohlinge dann umso weiter stromaufwärts ausgeleitet, je größer das Ausmaß einer festgestellten Abweichung von Initialdaten von zugeordneten Sollwerten ist. Zum einen können Maschinenfehlerzustände besonders zuverlässig vermieden werden, andererseits aber auch bestimmte Rohlinge gegebenenfalls noch möglichst viele Inspektionsschritte und/oder Produktionsschritte durchlaufen, um damit gewonnene Initialdaten und Ergebnisdaten für die Datenanalyse zu verwenden. Auch solche Rohlinge, aus denen kein ordnungsgemäßes Produkt hergestellt werden kann, dienen dann der Optimierung und dem automatischen Selbstlernprozess, beispielsweise durch automatisches Überprüfen oder Herstellen bestimmter Korrelationen von Rohling-Parametern und Flaschen-Parametern.

Vorzugsweise werden für die Rohling-Parameter Sollbereiche auf der Grundlage der Datenanalyse festgelegt, wobei Ausleitkriterien beispielsweise dann erfüllt sind, wenn Initialdaten eines geprüften Rohlings von den jeweiligen Sollbereichen abweichen, in einem bestimmten Ausmaß abweichen und/oder für eine bestimmte Kombination von Rohling-Parametern abweichen. Dies ermöglicht eine vergleichsweise einfache Steuerung und Zuordnung einzelner Ausleitvorgänge an bestimmten Stellen des Produktionsstroms, beispielsweise durch dort jeweils geltende Ausleitkriterien, sowohl für die geprüften Rohlinge als auch für gegebenenfalls daraus streckgeblasene Flaschen.

Vorzugsweise werden die Sollbereiche und/oder das Ausleitkriterium auf der Grundlage fortschreitender Anhäufung hinzugewonnener Initialdaten und Ergebnisdaten automatisch aktualisiert. Die Datenanalyse kann somit bei fortschreitender Produktion verfeinert und präzisiert werden. Hierbei ist es auch möglich, bestimmte Datensätze von Initialdaten und Ergebnisdaten außer Acht zu lassen oder zu löschen, beispielsweise veraltete Datensätze oder solche, die sich auf Parametersätze mit bei einem bei bestimmten Rohlingen nicht anwendbarem Rohling-Parameter und/oder Ergebnisparameter beziehen.

Vorzugsweise berücksichtig man bei der Datenanalyse mehrere Parametersätze, die jeweils assoziierte Rohling-Parameter und Flaschen-Parameter umfassen. Dabei gehen Abweichungen gemessener Rohling-Parameter von ihren Sollbereichen mit einer geeigneten Gewichtung in die Festlegung von Ausleitkriterien ein. Hierbei werden die Abweichungen vorzugsweise auf der Grundlage der hinzugewonnenen Initialdaten und Ergebnisdaten dynamisch gewichtet.

Beispielsweise können Rohling-Parameter, bei denen sich Abweichungen von ihren zugeordneten Sollbereichen sich im Laufe der im Produktionsbetrieb fortschreitenden Datenanalyse als weniger kritisch herausgestellt haben, geringer gewichtet werden und umgekehrt.

Vorzugsweise geben die Rohling-Parameter wenigstens drei, insbesondere wenigstens fünf, der folgenden Eigenschaften und/oder Zustände des jeweiligen Rohlings an: seine Länge und/oder Kontur; seine Farbe; eine Ovalität seiner Dichtfläche, eine Verschmutzung seiner Dichtfläche; eine Beschädigung seiner Dichtfläche; eine Lage seines Anspritzpunkts; ein Temperaturprofil in einer Wand des Rohlings; eine Materialspannung in einer Wand des Rohlings; sein Material; Lufteinschlüsse, Schlieren und/oder Risse; und eine Wanddicke des Rohlings.

Vorzugsweise werden wenigstens einige der Rohling-Parameter bildgebend vor einem Einlaufbereich zu einem Streckblaskarussell erfasst, insbesondere vor, in und/oder unmittelbar nach einem Heiztunnel zum Vorwärmen der Rohlinge. Bildgebend erhält man aus vergleichsweise wenigen Messvorgängen mit der Datenanalyse umfassend und flexibel auswertbare Initialdaten, die so zudem möglichst weit stromaufwärts des Streckblaskarussells ermittelt werden, um gegebenenfalls auszuführende Ausleitvorgänge und gegebenenfalls auszuführenden Flascheninspektionen gezielt und rechtzeitig ausführen zu können.

Vorzugsweise geben die Flaschen-Parameter wenigstens zwei der folgenden Eigenschaften und/oder Zustände der Flaschen an: die Lage des Anspritzpunkts; eine Verschmutzung des Bodens; eine Trübung des Bodens; eine Kontur der Seitenwand; eine Verschmutzung der Seitenwand; eine Trübung der Seitenwand; eine Ovalität der Dichtfläche; eine Verschmutzung der Dichtfläche; eine Beschädigung der Dichtfläche; eine Materialverteilung im Boden; eine Symmetrie/Asymmetrie der Massenverteilung; und ein Flaschenbruch.

Vorzugsweise umfassen die Fehlerzustände; ein Verklemmen eines Rohlings in einer Blasform; eine Mehrfachbestückung einer Blasform, eine Undichtigkeit beim Blasvorgang, ein Abreißen des Rohlings beim Recken bzw. Vorblasen; und/oder eine Undichtigkeit oder ein Bersten beim Abfüllen; und/oder ein Umfallen auf dem weiteren Transport wegen einer deformierten Behältergeometrie

Die gestellte Aufgabe wird ebenso mit einer Streckblasanlage und/oder Abfüllanlage für Flaschen gemäß Anspruch 14 gelöst. Demnach umfasst die Streckblasanlage und/oder Abfüllanlage eine Streckblasmaschine und/oder eine Füllmaschine für Flaschen und darüber hinaus: wenigstens eine stromaufwärts und/oder stromabwärts der Streckblasmaschine angeordnete Ausleitvorrichtung für Rohlinge; eine stromabwärts der Streckblasmaschine angeordnete Ausleitvorrichtung für zuvor geblasene Flaschen; Inspektionseinheiten für die Rohlinge und die Flaschen zum Erheben von Initialdaten und Ergebnisdaten mit dem Verfahren nach wenigstens einer der voranstehenden Ausführungsformen; und eine Steuerung zum Auslösen der Ausleitvorrichtungen auf der Grundlage wenigstens eines mit dem Verfahren nach wenigstens einer der voranstehend beschriebenen Ausführungsformen berechneten Ausleitkriteriums. Damit lassen sich die bezüglich des Verfahrens beschriebenen Vorteile erzielen.

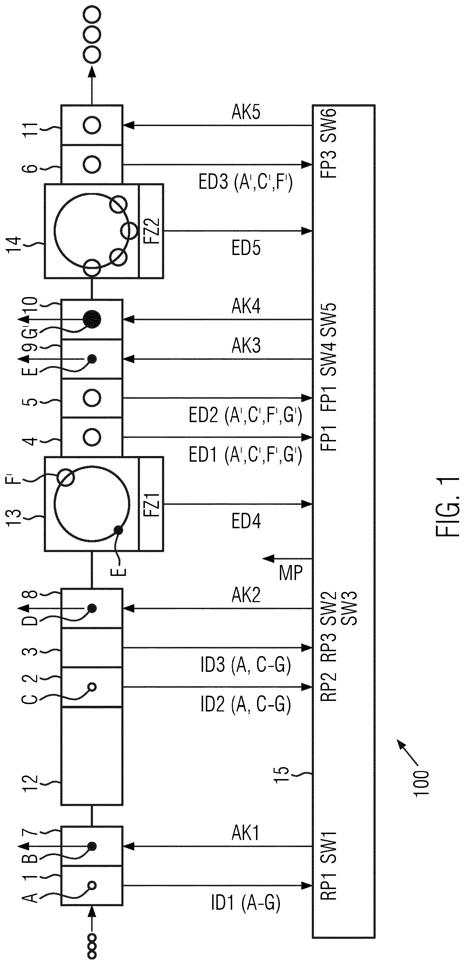

Eine bevorzugte Ausführungsform der Erfindung ist zeichnerisch dargestellt. Die Fig. 1 zeigt eine schematische Draufsicht auf eine Produktionsanlage mit zugehörigen Datenströmen.

Wie die Fig. 1 erkennen lässt, wird das erfindungsgemäße Verfahren zur Produktionssteuerung vorzugsweise in einer Streckblas- und Abfüllanlage 100 für Flaschen durchgeführt. Die Streckblas- und Abfüllanlage 100 umfasst demnach jeweils beispielhaft dargestellte Inspektionseinheiten 1 - 3 für Rohlinge, Inspektionseinheiten 4 - 6 für Flaschen, Ausleitvorrichtungen 7 - 9 für Rohlinge, Ausleitvorrichtungen 10, 11 für Flaschen, eine Heizstation 12, insbesondere einen Heiztunnel, zum Vorwärmen der zum Streckblasen bereitgestellten Rohlinge, eine Streckblasmaschine 13 mit einer Vielzahl von (nicht dargestellten) Blasformen zum Streckblasen von Flaschen aus den vorgewärmten Rohlingen, eine Füllmaschine 14 zum Abfüllen eines flüssigen Produkts, insbesondere Getränks, in die streckgeblasenen Flaschen und eine Steuerung 15 für die Streckblas- und Abfüllanlage 100.

Die Produktionssteuerung ist beispielhaft anhand von sieben zugeleiteten / bereitgestellten Rohlingen A - G und/oder den daraus streckgeblasenen Flaschen A', C`, F' und G' schematisch angedeutet. Schwarze Kreisfüllungen bezeichnen dabei negative Inspektionsergebnisse. Demnach werden die zwei Rohlinge B, D aufgrund negativer Inspektionsergebnisse in wenigstens einer der stromaufwärts der Streckblasmaschine 13 angeordneten und diesbezüglich eingangsseitigen Inspektionseinheiten 1 - 3 vor der Streckblasmaschine 13 an der ersten oder zweiten Ausleitvorrichtung 7, 8 ausgeleitet.

Der Rohling E wird dagegen trotz wenigstens eines negativen Inspektionsergebnisses in den eingangsseitigen Inspektionseinheiten 1 - 3 zunächst durch die Streckblasmaschine 13 geleitet und erst an der stromabwärts der Streckblasmaschine 13 angeordneten und diesbezüglich ausgangsseitigen, dritten Ausleitvorrichtung 9 ausgeleitet.

Die vier Rohlinge A, C, F und G (davon nicht alle als kleiner Kreis dargestellt) passieren die erste und zweite Inspektionseinheit 2, 3 mit ordnungsgemäßen Inspektionsergebnissen und werden folglich zu Flaschen A', C`, F' und G` streckgeblasen.

In der ersten eingangsseitigen Inspektionseinheiten 1 wird stromaufwärts der Heizstation 12 ein erster Rohling-Parameter RP1 gemessen, beispielsweise das Ausmaß einer Dichtflächenasymmetrie der Rohlinge A - G. In der zweiten und dritten eingangsseitigen Inspektionseinheit 2, 3 wird in und/oder stromabwärts der Heizstation 12 ein zweiter und dritter Rohling-Parameter RP2, RP3 gemessen, beispielsweise ein in den Rohlingen A und C - G erzeugtes Temperaturprofil und das Ausmaß einer gegebenenfalls vorhandenen Seitenwandverschmutzung der Rohlinge A und C - G.

Die erste Inspektionseinheit 2 liefert dabei für jeden dort vermessenen Rohling A - G wenigstens einen Messwert des ersten Rohling-Parameters RP1 in Form von ersten Initialdaten ID1. Die zweite Inspektionseinheit 3 liefert entsprechend für jeden dort vermessenen Rohling A, C - G Messwerte des zweiten und dritten Rohling-Parameters RP2, RP3 in Form von zweiten und dritten Initialdaten ID2, ID3. Diese werden jeweils an die Steuerung 15 übermittelt. Die ersten Initialdaten ID1 werden allen Rohlingen A - G zugeordnet, die zweiten und dritten Initialdaten ID2, ID3 den verbliebenen Rohlingen A und C - G.

In der stromabwärts der Streckblasmaschine 13 angeordneten und diesbezüglich ausgangsseitigen vierten und fünften Inspektionseinheit 4, 5 werden die streckgeblasenen Flaschen A', C`, F', G' (davon nicht alle als großer Kreis dargestellt) hinsichtlich beim Streckblasen erzeugter Flaschen-Parameter FP1, FP2 untersucht, wie beispielsweise einer Materialverteilung im Boden der Flaschen A', C`, F', G' und einer Beschädigung ihrer Dichtflächen. Die vierte Inspektionseinheit 4 liefert dabei für jede dort vermessene Flasche wenigstens einen Messwert des ersten Flaschen-Parameters FP1 in Form von ersten Ergebnisdaten ED1, die fünfte Inspektionseinheit 5 entsprechend wenigstens einen Messwert des zweiten Flaschen-Parameters FP2 in Form von zweiten Ergebnisdaten ED2. Diese werden jeweils an die Steuerung 15 übermittelt. Die ersten und zweiten Ergebnisdaten ED1, ED2 werden den zu den Flaschen A', C`, F', G' geblasenen Rohlingen A, C, F, G zuordnet und somit deren Initialdaten ID1 - ID2.

Optional könnte der Rohling E beim Durchleiten durch die Streckblasmaschine 13 unvollständig bearbeitet werden, beispielsweise nur durch Recken ohne Fertigblasen zu einer Flasche, und in der vierten und/oder fünften Inspektionseinheit 4, 5 hinsichtlich wenigstens eines der Flaschen-Parameter FP1, FP2 oder hinsichtlich eines beispielsweise lediglich für das Recken oder dergleichen Behandlungsschritt relevanten Parameters inspiziert werden. Dabei gewonnene Ergebnisdaten ED1, ED2 können dann ebenso in der Steuerung 15 gespeichert und dem Rohling E sowie seinen bereits abgespeicherten Initialdaten ID1 - ID3 zugeordnet werden.

In der bezogen auf das Streckblasen und Abfüllen ausgangsseitigen sechsten Inspektionseinheit 6 werden die streckgeblasenen und gefüllten Flaschen A', C', F' hinsichtlich wenigstens eines beim Streckblasen und/oder Abfüllen erzeugten Flaschen-Parameters FP3 vermessen, beispielsweise auf Dichtigkeit oder dergleichen. Dabei gewonnene dritte Ergebnisdaten ED3 werden dann ebenso in der Steuerung 15 gespeichert und den zugrundeliegenden Rohlingen A, C, F sowie ihren abgespeicherten Initialdaten ID1 - ID3 zugeordnet.

Schematisch angedeutet ist ferner, dass die Streckblasmaschine 13 beispielsweise hinsichtlich des Auftretens eines ersten Maschinenfehlerzustands FZ1 überwacht werden kann, die Füllmaschine 14 beispielsweise hinsichtlich des Auftretens eines zweiten Maschinenfehlerzustands FZ2. Der erste Maschinenfehlerzustand FZ1 ist beispielsweise ein Verklemmen einer Blasform oder eine festgestellte Mehrfachbestückung einer Blasform. Der zweite Maschinenfehlerzustand FZ2 ist beispielsweise ein Flaschenbruch im Bereich der Füllmaschine 14, eine dort festgestellte Undichtigkeit oder dergleichen.

Bei Vorliegen eines Maschinenfehlerzustands FZ1, FZ2 werden zugehörige vierte bzw. fünfte Ergebnisdaten ED4, ED5 in der Steuerung 15 gespeichert und dem jeweils betroffenen Rohling sowie seinen abgespeicherten Initialdaten ID1 - ID3 zugeordnet.

Die Steuerung 15 führt während des Produktionsbetriebs in vorgegebenen Intervallen eine Datenanalyse auf der Grundlage der für eine Vielzahl von Rohlingen erhobenen Initialdaten ID1 - ID3 und jeweils dafür vorliegenden Ergebnisdaten ED1 - ED5 durch. Die Datenanalyse umfasst beispielsweise ein Data-Mining mit Klassifikation und/oder Regressionsanalyse und/oder Assoziationsanalyse und beruht vorzugsweise auf selbstlernenden Algorithmen im Sinne einer künstlichen Intelligenz. Basierend auf der Datenanalyse werden Ausleitkriterien AK1 - AK5 berechnet, die festlegen, welche Initialdaten ID1 - ID3 oder welche Ergebnisdaten ED1 - ED5 ein Ausleiten von Rohlingen / Flaschen an einer der Ausleitvorrichtungen 7 - 11 zur Folge haben.

Ein erstes Ausleitkriterium AK1 dient beispielsweise der Entscheidung darüber, ob ein als fehlerhaft in der ersten Inspektionseinheit 1 erkannter Rohling von der ersten Ausleitvorrichtung 7 aus dem Produktstrom ausgesondert werden soll. In gezeigten Beispiel ist dies für den Rohling B der Fall, wie durch einen Ausleitpfeil schematisch dargestellt ist. Der Rohling B erfüllt das erste Ausleitkriterium AK1 beispielsweise, wenn die für den Rohling B gemessen Initialdaten ID1 von einem in der Steuerung 15 auf der Grundlage der Datenanalyse berechneten Sollwert SW1 des zugehörigen Rohling-Parameters RP1 in unzulässiger Weise abweicht.

Nach Ausleiten des Rohlings B an der ersten Ausleitvorrichtung 7, ausgelöst vom ersten Ausleitkriterium AK1, können für diesen Rohling B weder weitere Initialdaten ID2, ID3 noch Ergebnisdaten ED1 - ED5 erhoben werden.

Im Sinne einer möglichst umfassenden Optimierung des Produktionsablaufs ist es jedoch wünschenswert, gegebenenfalls auch für fehlerhafte Rohlinge zusätzliche Initialdaten ID2, ID3 und/oder Ergebnisdaten ED1 - ED5 zu gewinnen, um Korrelationen zwischen Initialdaten ID2, ID3 und/oder Ergebnisdaten ED1 - ED5 herzustellen und/oder zu präzisieren und/oder zu gewichten. Auf dieser Grundlage können dann die Datenanalyse und mit ihr die Ausleitkriterien AK1 - AK5 dynamisch optimiert werden.

Andererseits sind Beschädigungen der Streckblas- und Abfüllanlage 100 sowie Produktionsunterbrechungen möglichst umfassend zu vermeiden. Folglich werden die Ausleitkriterien AK1 - AK5 laufend optimiert, um sowohl den Anforderungen an eine aussagekräftige Datenanalyse als auch den Anforderungen an einen wirtschaftlichen und reibungslosen Produktionsablauf sowie der angestrebten Produktqualität zu genügen.

Unter dieser Prämisse werden möglichst viele Rohlinge an der ersten Ausleitvorrichtung 7 nicht ausgeleitet, sondern, wie im Falle der Rohlinge A und C - G, der Heizstation 12 zugeführt und dort für das anschließende Streckblasen vorgewärmt. Danach werden die Rohlinge A und C - G in der zweiten und dritten Inspektionseinheit 2, 3 inspiziert und deren so gewonnene Initialdaten ID2 und ID3 an die Steuerung 15 übermittelt.

Für jeden der derart inspizierten Rohlinge A, C - G wird geprüft, ob ein zuvor in der Steuerung 15 auf Grundlage der Datenanalyse berechnetes zweites Ausleitkriterium AK2 erfüllt ist.

Dieses ist beispielsweise erfüllt, wenn wenigstens die zweiten Initialdaten ID2 oder die dritten Initialdaten ID3 eines bestimmten Rohlings A, C-G in unzulässiger Weise von einem Sollwert SW2, SW3 des jeweils zugehörigen Rohling-Parameters RP2, RP3 abweicht. Im gezeigten Beispiel ist dies für den Rohling D der Fall. Dieser wird daher von der zweiten Ausleitvorrichtung 8 aus dem Produktstrom ausgesondert.

Hierbei kann jedes Ausleitkriterium AK1 - AK5 nahezu beliebig auf der Grundlage der zuvor erhobenen Initialdaten ID1 - ID3 und der individuell zugeordneten Ergebnisdaten ED1 - ED5 berechnet werden. Beispielsweise falls sich herausgestellt hat, dass eine bestimmte Konstellation von Initialdaten ID1 - ID3 mit für die Produktqualität negativen und/oder für den Produktionsablauf schädlichen Ergebnisdaten ED1 - ED5 korreliert.

Das erste und/oder zweite Ausleitkriterium AK1, AK2 würde bei einer derart negativen Prognose für einen bestimmten Rohling dessen Weiterleiten zur Heizeinrichtung 12, Streckblasmaschine 13 und/oder Abfüllmaschine 14 unterbinden, indem der betroffene Rohling an der ersten oder zweiten Ausleitvorrichtung 7, 8 ausgeleitet wird. Entsprechend können Ausleitkriterien AK1 - AK5 auch gelockert werden, falls dies aus einer aktualisierten Datenanalyse geschlossen wird.

Die Initialdaten ID1 - ID3 der Rohlinge A und C - G erfüllen das zweite Ausleitkriterium AK2 nicht, sodass sie der Streckblasmaschine 13 zugeführt werden. Im Bereich der Streckblasmaschine 13 ist schematisch angedeutet, dass ein zuvor nicht ausgeleiteter Rohling E aufgrund seiner Initialdaten ID1 - ID3 zwar nicht das zweite Ausleitkriterium AK2 erfüllt, jedoch ein drittes Ausleitkriterium AK3, wodurch der Rohling E stromabwärts der Streckblasmaschine 13 an der dritten Ausleitvorrichtung 9 aus dem Produktstrom ausgesondert wird. In diesem Fall wird der Rohling E nicht behandelt und lediglich durch die Streckblasmaschine 13 geschleust oder nur teilweise in der Streckblasmaschine 13 behandelt, beispielsweise durch ein Recken des ohne anschließenden Blasvorgang, und dann ausgesondert.

Stromabwärts der Streckblasmaschine 13 könnte der Rohling E oder der nur teilweise behandelte Rohling E sowohl ohne weitere Inspektion ausgeschleust werden oder zuvor wenigstens einer weiteren Inspektion in der vierten und/oder fünften Inspektionseinheit 4, 5 unterzogen werden. Dadurch ließen sich im Rahmen der Datenanalyse verwertbare erste und/oder zweite Ergebnisdaten ED1, ED2 gewinnen. Da der nicht oder nur teilweise behandelte Rohling E nicht mit einem Produkt gefüllt werden kann, erfüllt er das dritte Ausleitkriterium AK3 zwangsläufig und wir von der dritten Ausleitvorrichtung 9 in jedem Fall aus dem Produktstrom ausgesondert.

Alle Rohlinge, deren Initialdaten ID1 ID3 weder das erste noch das zweite Ausleitkriterium AK1, AK2 erfüllen, hier die Rohlinge A, C, F und G, werden in der Streckblasmaschine 13 zu Flaschen A', C`, F' und G' geblasen und in der vierten und fünften Inspektionseinheit 4, 5 inspiziert. Die dabei gewonnenen ersten und zweiten Ergebnisdaten ED1, ED2 werden den zugrundeliegenden Rohlingen A, C, F und G zugeordnet und können in der Datenanalyse sowohl untereinander als auch mit den zugeordneten Initialdaten ID1 - ID3 der Rohlinge A, C, F und G korreliert werden.

Ist für die derart untersuchten Behälter ein viertes Ausleitkriterium AK4 erfüllt, beispielsweise da die ersten Ergebnisdaten ID1 und/oder zweiten Ergebnisdaten ED2 in unzulässiger Weise von einem vierten bzw. fünften Sollwert SW4, SW5 des jeweils zugehörigen Flaschen-Parameters FP1, FP2 abweichen, so werden betroffene Flaschen, in Beispiel die Flasche G', an der vierten Ausleitvorrichtung 10 aus dem Produktstrom ausgesondert.

Ordnungsgemäß streckgeblasene Behälter A', C' und F' werden der Füllmaschine 14 zugeführt und dort mit einem Produkt, insbesondere Getränk, gefüllt. Dabei werden die gefüllten Behälter A', C', F' beispielsweise in einer fünften Inspektionseinheit 6 geprüft. Dabei gewonnene dritte Ergebnisdaten ED3 werden ebenso an die Steuerung 15 übermittelt.

Der Vollständigkeit halber ist ferner eine stromabwärts der Füllmaschine 14 angeordnete fünfte Ausleitvorrichtung 11 schematisch angedeutet. Diese leitet fehlerhafte Flaschen aus, für die ein fünftes Ausleitkriterium AK5 erfüllt ist, beispielsweise basierend auf einem Vergleich der dritten Ergebnisdaten ED3 mit einem sechsten Sollwert SW6 des zugehörigen dritten Flaschen-Parameters FP3.

Die laufend überwachten Maschinenfehlerzustände FZ1, FZ2 werden optional ebenso unter Zuordnung zum betroffenen bzw. zugrundeliegenden Rohling an die Steuerung 15 übermittelt, um diese im Sinne von vierten und fünften Ergebnisdaten ED4, ED5 in der Datenanalyse zu berücksichtigen. Sämtliche Ergebnisdaten ED1 - ED5 lassen sich so mit einzelnen oder Gruppen von Initialdaten ID1 - ID3 individuell für einzelne Rohlinge und/oder für Gruppen von Rohlingen miteinander korrelieren.

Im laufenden Produktionsbetrieb werden die Initialdaten ID1 - ID3 und die Ergebnisdaten ED1 - ED5, soweit sie für die einzelnen Rohlinge und Flaschen verfügbar sind, einander zugeordnet und angehäuft. Durch die Datenanalyse beispielsweise im Sinne eines Data-Mining, können Korrelationen zwischen einzelnen Rohling-Parametern RP1 - RP3, Flaschen-Parametern FP1 - FP3 und/oder Maschinenfehlerzuständen FZ1, FZ2 berechnet und durch Zugewinn von Initialdaten und Ergebnisdaten im Produktionsbetrieb laufend aktualisiert und gegebenenfalls präzisiert werden.

Auf dieser Grundlage können einzelne, im Produktionsbetrieb nachfolgend geltende Ausleitkriterien AK1 - AK5 laufend neu berechnet werden, um einzelne Rohlinge gezielt so auszuleiten, dass Produktionsunterbrechungen und/oder Beschädigungen vermieden werden können und gleichzeitig möglichst viel Information über Korrelationen zwischen Initialdaten und Ergebnisdaten hergestellt werden können.

Hierbei können einzelne Rohling-Parameter RP1 - RP3 bzw. die diesen zugeordneten Initialdaten ID1 - ID3 je nach Auswirkung auf Ergebnisdaten ED1 - ED5 gewichtet verarbeitet werden. Eine derartige Gewichtung von Parametern und/oder Parametersätzen kann zudem im laufenden Produktionsbetrieb im Sinne einer Selbstoptimierung der Streckblas- und Abfüllanlage 100 ständig angepasst werden, um möglichst viele und qualitativ hochwertige Flaschen aus den Rohlingen zu erzeugen und/oder die Aussagekraft der Datenanalyse zu verbessern.

Für die Verarbeitung der Initialdaten ID1 - ID3 und der Ergebnisdaten ED1 - ED5 sind prinzipiell beliebige Algorithmen in der Steuerung 15 anwendbar. Insbesondere auch solche, die im Sinne einer künstlichen Intelligenz eine maschineninterne Optimierung und/oder ein maschineninternes Lernen ermöglichen. Derartige Algorithmen sind prinzipiell bekannt.

Entscheidend ist, dass die Ausleitkriterien AK1 - AK5 dynamisch in Abhängigkeit der sich anhäufenden und/oder aktualisierten Datenmenge mit einander zugeordneten Initialdaten der Rohlinge und Ergebnisdaten der daraus geblasenen Behälter angepasst werden können.

Maschinenparameter MP, beispielsweise der Heizstation 12, der Streckblasmaschine 13 und/oder der Füllmaschine 14 können auf der Grundlage der hinzugewonnenen Initialdaten ID1 - ID3 und Ergebnisdaten ED1 - ED5 zur Optimierung der Produktqualität laufend angepasst werden.

Die hinzugewonnenen Initialdaten ID1 - ID3 und Ergebnisdaten ED1 - ED5 können in den Produktionsbetrieb sowohl durch manuell ausgelöste als auch durch automatische Aktualisierung von Ausleitkriterien AK1 - AK5 und/oder Maschinenparametern MP einfließen.

Dies ermöglicht gleichzeitig die Minimierung von Maschinenfehlerzuständen und die Qualitätsoptimierung beim Streckblasen und Füllen von Flaschen im laufenden Betrieb.

## Patentansprüche

1. Verfahren zur Produktführung in einer Streckblas- und/oder Abfüllanlage (100),
wobei man Rohling-Parameter (RP1 - RP3) von zum Streckblasen bereitgestellten Rohlingen (A - G) automatisch misst und dabei Initialdaten (ID1 - ID3) zum Streckblasen gewinnt und abspeichert,
wobei man Flaschen-Parameter (FP1 - FP3) von beim Streckblasen hergestellten und/oder nach dem Streckblasen gefüllten Flaschen (A', C', F', G') misst und man insbesondere ferner beim Streckblasen und/oder Abfüllen auftretende Maschinenfehlerzustände (FZ1, FZ2) automatisch feststellt, und wobei dabei jeweils gewonnene Ergebnisdaten (ED1 - ED5) des Streckblasens und/oder Abfüllens den Rohlingen individuell zugeordnet und abspeichert werden,
wobei man wenigstens ein im Produktionsbetrieb nachfolgend geltendes Ausleitkriterium (AK1 - AK5) zur Entscheidung über ein Ausleiten fehlerhafter Rohlinge oder Flaschen auf der Grundlage einer Datenanalyse der gespeicherten Initialdaten und Ergebnisdaten berechnet,
und wobei die Berechnung des Ausleitkriteriums unter Berücksichtigung im Produktionsbetrieb hinzugewonnener Initialdaten und Ergebnisdaten aktualisiert wird.

2. Verfahren nach Anspruch 1, wobei die hinzugewonnenen Initialdaten (ID1 - ID3) und Ergebnisdaten (ED1 - ED5) in den Produktionsbetrieb manuell und/oder automatisch aktualisiert übernommen werden.

3. Verfahren nach Anspruch 1 oder 2, wobei Maschinenparameter (MP), insbesondere einer Heizstation (12) zum Vorwärmen der Rohlinge (A - G), einer Streckblasmaschine (13) zum Herstellen der Flaschen (A', C`, F', G') und/oder einer Füllmaschine (14) zum Befüllen der Flaschen, zur Optimierung der erzielten Produktqualität angepasst werden.

4. Verfahren nach einem der vorigen Ansprüche, wobei das Ausleitkriterium (AK1 - AK5) derart automatisch optimiert wird, dass eine mittels der Datenanalyse prognostizierte anteilige Häufigkeit zulässiger Werte der Flaschen-Parameter (FP1 - FP3) steigt und optional ferner die prognostizierte anteilige Häufigkeit von Maschinenfehlerzuständen (FZ1, FZ2) sinkt.

5. Verfahren nach wenigstens einem der vorigen Ansprüche, wobei die Datenanalyse ein Data-Mining umfasst, insbesondere eine Assoziationsanalyse und/oder eine Regressionsanalyse und/oder eine Datenklassifikation.

6. Verfahren nach wenigstens einem der vorigen Ansprüche, wobei ein Erfüllen des Ausleitkriteriums (AK1 - AK5) auslöst: ein Ausleiten der Rohlinge (A - G) stromaufwärts der dafür vorgesehenen Blasformen; ein Durchleiten der Rohlinge in den Blasformen ohne Streckblasen und anschließendes Ausleiten der Rohlinge; oder ein Streckblasen und Ausleiten der dabei hergestellten Flaschen, insbesondere vor dem Abfüllen.

7. Verfahren nach wenigstens einem der vorigen Ansprüche, wobei Sollbereiche (SW1 - SW3) der Rohling-Parameter (RP1 - RP3) auf der Grundlage der Datenanalyse festgelegt werden, und wobei das Ausleitkriterium (AK1 - AK3) vorgibt, welche und/oder in welchem Ausmaß Initialdaten (ID1 - ID3) eines geprüften Rohlings (A - G) von den jeweiligen Sollbereichen abweichen dürfen.

8. Verfahren nach einem der vorigen Ansprüche, wobei die Sollbereiche (SW1 - SW6) und/oder das Ausleitkriterium (AK1 - AK5) auf der Grundlage fortschreitender Anhäufung hinzugewonnener Initialdaten (ID1 - ID3) und Ergebnisdaten (ED1 - ED3) aktualisiert wird/werden.

9. Verfahren nach wenigstens einem der vorigen Ansprüche, wobei man bei der Datenanalyse mehrere Parametersätze berücksichtigt, die jeweils assoziierte Rohling-Parameter (RP1 - RP3) und Flaschen-Parameter (FP1 - FP3) umfassen, und wobei Abweichungen gemessener Rohling-Parameter von ihren Sollbereichen (SW1 - SW3) gewichtet, insbesondere auf der Grundlage hinzugewonnener Initialdaten (ID1 - ID3) und Ergebnisdaten (ED1 - ED3) dynamisch gewichtet, in die Festlegung des Ausleitkriteriums (AK1 - AK5) eingehen.

10. Verfahren nach wenigstens einem der vorigen Ansprüche, wobei die Rohling-Parameter (RP1 - RP3) wenigstens drei, insbesondere wenigstens fünf, der folgenden Eigenschaften / Zustände des jeweiligen Rohlings (A - G) angeben: seine Länge und/oder Kontur; seine Farbe; eine Ovalität seiner Dichtfläche; eine Verschmutzung seiner Dichtfläche; eine Beschädigung seiner Dichtfläche; eine Lage seines Anspritzpunkts; ein Temperaturprofil in einer Wand des Rohlings; eine Materialspannung in einer Wand des Rohlings; sein Material; Lufteinschlüsse, Schlieren und/oder Risse; und eine Wanddicke.

11. Verfahren nach wenigstens einem der vorigen Ansprüche, wobei wenigstens einige der Rohling-Parameter (RP1 - RP3) bildgebend vor und/oder im Einlaufbereich einer Streckblasmaschine (13) erfasst werden, insbesondere vor, in und/oder unmittelbar nach einem Heiztunnel (12) zum Vorwärmen der Rohlinge (A - G).

12. Verfahren nach wenigstens einem der vorigen Ansprüche, wobei die Flaschen-Parameter (FP1 - FP3) wenigstens zwei der folgenden Eigenschaften / Zustände der Flaschen (A', C`, F', G') angeben: die Lage des Anspritzpunkts; Verschmutzung des Bodens; Trübung des Bodens; Kontur der Seitenwand; Verschmutzung der Seitenwand; Trübung der Seitenwand; Ovalität der Dichtfläche; Verschmutzung der Dichtfläche; Beschädigung der Dichtfläche; Materialverteilung im Boden; Symmetrie der Massenverteilung und Flaschenbruch.

13. Verfahren nach wenigstens einem der vorigen Ansprüche, wobei die Maschinenfehlerzustände (FZ1, FZ2) umfassen: ein Verklemmen einer Blasform; eine Mehrfachbestückung einer Blasform; ein Verklemmen eines Rohlings (A - G) auf einem Heizdorn; entstehende/ bestehende Undichtigkeit wegen schlecht ausgeformter Behältermündung; ein Verschmutzen oder Beschädigen der Heizstation bzw. des Ofens wegen Fadenbildung und/oder taumelnder Rohlinge; umfallende Behälter wegen ausgestülpter Behälterböden; und/oder eine Undichtigkeit oder ein Bersten einer Flasche beim Abfüllen und/oder Vorspannen.

14. Streckblas- und Abfüllanlage (100) mit einer Streckblasmaschine (13) und/oder einer Füllmaschine (14) für Flaschen (A', C`, F`, G') und ferner umfassend: wenigstens eine stromaufwärts und/oder stromabwärts der Streckblasmaschine angeordnete Ausleitvorrichtung (7, 8) für Rohlinge (A - G); eine stromabwärts der Streckblasmaschine angeordneten Ausleitvorrichtung (10) für zuvor geblasene Flaschen; Inspektionseinheiten (1 - 6) für die Rohlinge und die Flaschen zum Erheben von Initialdaten (ID1 - ID3) und Ergebnisdaten (ED1 - ED3) mit dem Verfahren nach wenigstens einem der vorigen Ansprüche; und eine Steuerung (15) zum Auslösen der Ausleitvorrichtungen (7, 8, 10) auf der Grundlage wenigstens eines mit dem Verfahren nach wenigstens einem der vorigen Ansprüche berechneten Ausleitkriteriums (AK1 - AK5).

## Claims

1. A method for guiding a product in a stretch blow molding and/or filling machine (100),
wherein blank parameters (RP1 - RP3) of blanks (A - G) provided for stretch blow molding are automatically measured for acquiring and storing initial data (ID1 - ID3) for stretch blow molding,
wherein bottle parameters (FP1 - FP3) of bottles (A', C', F', G') produced during stretch blow molding and/or filled thereafter are measured and, in particular, machine error conditions (FZ1, FZ2) occurring during stretch blow molding and/or filling are automatically detected, and wherein respective result data (ED1 - ED5) acquired during stretch blow molding and/or filling are individually assigned to the blanks and stored,
wherein at least one rejection criterion (AK1 - AK5) applicable during the following production process is calculated on the basis of a data analysis of the stored initial data and result data to be used when deciding about the rejection of defective blanks or bottles, and wherein the calculation of the rejection criterion is updated taking into account initial data and result data additionally acquired during the production process.

2. The method according to claim 1, wherein the initial data (ID1 - ID3) and result data (ED1 - ED5) additionally acquired are included into the production process after having been manually and/or automatically updated.

3. The method according to claims 1 or 2, wherein machine parameters (MP), in particular of a heating station (12) for preheating the blanks (A - G), of a stretch blow-molding machine (13) for producing the bottles (A', C, F', G') and/or of a filling machine (14) for filling the bottles, are adapted to optimize product quality.

4. The method according to any one of the preceding claims, wherein the rejection criterion (AK1 - AK5) is automatically optimized for increasing a proportion of permissible values of the bottle parameters (FP1 - FP3) predicted by means of the data analysis and for optionally furthermore decreasing the predicted proportion of machine error conditions (FZ1, FZ2).

5. The method according to at least one of the preceding claims, wherein the data analysis comprises data mining, in particular an association analysis and/or a regression analysis and/or a data classification.

6. The method according to at least one of the preceding claims, wherein, when the rejection criterion (AK1 - AK5) is satisfied the blanks (A - G) are rejected upstream of the blow molds provided therefore; the blanks in the blow molds are passed therethrough without being stretch blow molded and subsequently rejected; or the finished bottles are stretch blow molded and rejected, in particular without being filled.

7. The method according to at least one of the preceding claims, wherein desired ranges (SW1 - SW3) of the blank parameters (RP1 - RP3) are determined on the basis of the data analysis, and wherein the rejection criterion (AK1 - AK3) specifies to what extent certain initial data (ID1 - ID3) of a tested blank (A - G) will be allowed to deviate from the respective desired ranges.

8. The method according to any one of the preceding claims, wherein the desired ranges (SW1 - SW6) and/or the rejection criterion (AK1 - AK5) are updated on the basis of progressive accumulation of additionally acquired initial data (ID1 - ID3) and result data (ED1 - ED3).

9. The method according to at least one of the preceding claims, wherein several parameter sets are taken into account in the data analysis, each comprising associated blank parameters (RP1 - RP3) and bottle parameters (FP1 - FP3), and wherein values of measured blank parameters deviating from their desired ranges (SW1 - SW3) are included in the determination of the rejection criterion (AK1 - AK5) after being weighted, in particular being dynamically weighted on the basis of additionally acquired initial data (ID1 - ID3) and result data (ED1 - ED3).

10. The method according to at least one of the preceding claims, wherein the blank parameters (RP1 - RP3) indicate at least three, in particular at least five, of the following properties/conditions of the respective blank (A - G):
its length and/or contour; its color; an ovality of its sealing surface; a contamination of its sealing surface; a damage of its sealing surface; a position of its injection point; a temperature profile in a wall of the blank; a stress in the material of a wall of the blank; its material; air inclusions, streaks and/or cracks; and a wall thickness.

11. The method according to at least one of the preceding claims, wherein at least some of the blank parameters (RP1 - RP3) are detected by imaging upstream of the inlet area of a stretch blow molding machine (13) or therein, in particular upstream of a heating tunnel (12) for preheating the blanks (A - G), therein or immediately downstream thereof.

12. The method according to at least one of the preceding claims, wherein the bottle parameters (FP1 - FP3) indicate at least two of the following properties/conditions of the bottles (A', C, F', G'):
the position of the injection point; contamination of the bottom; clouding of the bottom; contour of the side wall; contamination of the side wall; clouding of the side wall; ovality of the sealing surface; contamination of the sealing surface; damage to the sealing surface; material distribution in the bottom; symmetry of the mass distribution and breakage.

13. The method according to at least one of the preceding claims, wherein the machine error conditions (FZ1, FZ2) comprise:
jamming of a blow mold; a multiple loading of a blow mold; a jamming of a blank (A - G) on a heating mandrel; beginning/existing leakage due to a poorly formed container mouth; contamination or damage to the heating station or furnace due to stringing and/or tumbling blanks; tipping of containers due to outwardly bulging container bottoms; and/or leakage or bursting of a bottle during filling and/or prestressing.

14. A stretch blow molding and filling plant (100) comprising a stretch blow molding machine (13) and/or a filling machine (14) for bottles (A', C', F', G') and further comprising at least one rejection device (7, 8) for blanks (A - G) arranged upstream and/or downstream of the stretch blow molding machine; a rejection device (10) for blown bottles arranged downstream of the stretch blow molding machine; inspection units (1 - 6) for the blanks and the bottles for collecting initial data (ID1 - ID3) and result data (ED1 - ED3) by the method according to at least one of the preceding claims; and a controller (15) for triggering the rejection devices (7, 8, 10) on the basis of at least one rejection criterion (AK1 - AK5) calculated by the method according to at least one of the preceding claims.

## Revendications

1. Procédé de guidage de produit dans une installation de soufflage-étirage et ou de remplissage (100),
des paramètres d'ébauche (RP1 - RP3) d'ébauches (A - G) mises à disposition pour un soufflage-étirage étant mesurés automatiquement et des données initiales (ID1 - ID3) pour le soufflage-étirage étant obtenues et enregistrées,
des paramètres de bouteilles (FP1 - FP3) de bouteilles fabriquées par le soufflage-étirage et/ou remplies après le soufflage-étirage (A', C', F', G') étant mesurés, et en particulier des états d'erreur de machine (FZ1, FZ2) survenant lors du soufflage-étirage et/ou du remplissage étant en outre détectés automatiquement, et les données de résultat (ED1 - ED5) respectives obtenues du soufflage-étirage et/ou du remplissage sont associées individuellement aux ébauches et stockées,
au moins un critère de rejet (AK1 - AK5) applicable ensuite dans l'activité de production étant calculé pour décider d'un rejet d'ébauches ou de bouteilles défectueuses sur la base d'une analyse de données des données initiales et des données de résultats stockées,
et dans lequel le calcul du critère de rejet est mis à jour en tenant compte des données initiales et des données de résultat obtenues au cours de l'activité de production.

2. Procédé selon la revendication 1, dans lequel les données initiales (ID1 à ID3) et les données de résultat (ED1 à ED5) obtenues sont appliquées à l'activité de production en étant mises à jour de manière manuelle et/ou automatique.

3. Procédé selon la revendication 1 ou 2, dans lequel des paramètres de machine (MP), en particulier d'une station de chauffage (12) permettant de préchauffer les ébauches (A à G), d'une machine de soufflage-étirage (13) permettant de produire les bouteilles (A', C', F', G') et/ou d'une machine de remplissage (14) permettant de remplir les bouteilles, sont ajustés afin d'optimiser la qualité de produit recherchée.

4. Procédé selon l'une quelconque des revendications précédentes, dans lequel le critère de rejet (AK1 à AK5) est optimisé de manière automatique de telle manière qu'une fréquence proportionnelle, prédite au moyen de l'analyse de données, des valeurs autorisées des paramètres de bouteilles (FP1 à FP3) augmente et, éventuellement et de manière supplémentaire, la fréquence proportionnelle prédite des états d'erreur de machine (FZ1, FZ2) diminue.

5. Procédé selon au moins l'une quelconque des revendications précédentes, dans lequel l'analyse de données comprend une exploration de données, en particulier une analyse d'association et/ou une analyse de régression et/ou une classification de données.

6. Procédé selon au moins l'une quelconque des revendications précédentes, dans lequel le respect du critère de rejet (AK1 - AK5) déclenche : un rejet des ébauches (A - G) en amont des moules de soufflage prévus à cet effet ; un passage des ébauches dans les moules de soufflage sans soufflage-étirage, puis un rejet des ébauches ; ou un soufflage-étirage et un rejet des bouteilles ainsi produites, en particulier avant le remplissage.

7. Procédé selon au moins l'une quelconque des revendications précédentes, dans lequel des plages de consigne (SW1 à SW3) des paramètres d'ébauche (RP1 à RP3) sont définies en se basant sur l'analyse de données, et dans lequel le critère de rejet (AK1 à AK3) spécifie quelles données initiales (ID1 à ID3) d'une ébauche (A à G) testée peuvent différer, et/ou dans quelle mesure elles peuvent différer, des plages de consigne respectives.

8. Procédé selon l'une quelconque des revendications précédentes, dans lequel les plages de consigne (SW1 à SW6) et/ou le critère de rejet (AK1 à AK5) est/sont mis(es) à jour en se basant sur l'accumulation progressive de données initiales (ID1 à ID3) et de données de résultat (ED1 à ED3) obtenues.

9. Procédé selon au moins l'une quelconque des revendications précédentes, dans lequel plusieurs ensembles de paramètres comprenant respectivement des paramètres d'ébauche (RP1 à RP3) et des paramètres de bouteilles (FP1 à FP3) associés sont pris en compte lors de l'analyse de données, et dans lequel les écarts entre les paramètres d'ébauche mesurés et leurs plages de consigne (SW1 à SW3) participent, en étant pondérés, à la détermination du critère de rejet (AK1 à AK5), en particulier en étant pondérés de manière dynamique en se basant sur des données initiales (ID1 à ID3) et des données de résultat (ED1 à ED3).

10. Procédé selon au moins l'une quelconque des revendications précédentes, dans lequel les paramètres d'ébauche (RP1 - RP3) indiquent au moins trois, en particulier au moins cinq, des propriétés/états suivants de l'ébauche respective (A - G) : sa longueur et/ou son contour ; sa couleur ; une ovalité de sa surface d'étanchéité ; une encrassement de sa surface d'étanchéité ; une détérioration de sa surface d'étanchéité ; une position de son point d'injection ; un profil de température dans une paroi de l'ébauche ; une contrainte de matériau dans une paroi de l'ébauche ; son matériau ; des inclusions d'air, des gorges et/ou des fissures ; et une épaisseur de paroi.

11. Procédé selon au moins l'une quelconque des revendications précédentes, dans lequel au moins certains des paramètres d'ébauche (RP1 à RP3) sont détectés par imagerie en amont de et/ou dans la région d'entrée d'une machine de soufflage-étirage (13), en particulier en amont et/ou en aval d'un tunnel de chauffage (12) permettant de préchauffer les ébauches (A à G).

12. Procédé selon au moins l'une quelconque des revendications précédentes, dans lequel les paramètres de bouteilles (FP1 - FP3) indiquent au moins deux des propriétés/états suivants des bouteilles (A', C', F', G') : la position du point d'injection ; l'encrassement du sol ; l'opacification du sol ; le contour de la paroi latérale ; l'encrassement de la paroi latérale ; l'opacification de la paroi latérale ; l'ovalité de la surface d'étanchéité ; l'encrassement de la surface d'étanchéité ; l'endommagement de la surface d'étanchéité ; la répartition de matériau dans le sol ; la symétrie de la répartition des masses et la rupture des bouteilles.

13. Procédé selon au moins l'une quelconque des revendications précédentes, dans lequel les états de défaillance de machine (FZ1, FZ2) comprennent : un blocage d'un moule de soufflage ; un équipement multiple d'un moule de soufflage ; un blocage d'une ébauche (A - G) sur un mandrin de chauffage ;une la fuite résultant/ existante en raison d'un orifice de récipient mal formé ; une contamination ou un endommagement de la station de chauffage ou du four en raison de la formation de fil et/ou d'ébauches oscillantes ; une chute de récipients en raison de fonds de récipients rincés ; et/ou une fuite ou un éclatement d'une bouteille lors du remplissage et/ou de la précontrainte.

14. Installation d'étirage-soufflage et de remplissage (100) avec une machine de soufflage-étirage(13) et/ou une machine de remplissage (14) pour de bouteilles (A', C', F', G') et comprenant en outre : au moins un dispositif de rejet (7, 8) pour des ébauches (A à G) agencé en amont et/ou en aval de la machine de soufflage-étirage ; un dispositif de rejet (10) pour des bouteilles précédemment soufflées agencé en aval de la machine de soufflage-étirage ; des unités d'inspection (1 à 6) pour les ébauches et les bouteilles afin de collecter des données initiales (ID1 à ID3) et des données de résultat (ED1 à ED3) à l'aide du procédé selon au moins l'une quelconque des revendications précédentes ; et une commande (15) pour déclencher les dispositifs de rejet (7, 8, 10) en se basant sur au moins un critère de rejet (AK1 à AK5) calculé à l'aide du procédé selon au moins l'une quelconque des revendications précédentes.
